Europäisches Patentamt

(19) European Patent Office

Office européen des brevets

(11) Numéro de publication: **0 129 488**

A1

(12) ## DEMANDE DE BREVET EUROPEEN

(21) Numéro de dépôt: **84420097.2**

(22) Date de dépôt: **06.06.84**

(51) Int. Cl.³: **B 60 Q 9/00**
**B 60 K 28/00**

(30) Priorité: **09.06.83 FR 8309843**

(43) Date de publication de la demande:
**27.12.84 Bulletin 84/52**

(84) Etats contractants désignés:
**BE CH DE GB IT LI NL**

(71) Demandeur: **ETS JACOB SA**
**10 rue Scheurer Kestner B.P. 214**
**F-42005 Saint Etienne Cedex(FR)**

(72) Inventeur: **Mouton, Jacques**
**Chemin des Flachères Charly**
**F-69390 Vernaison(FR)**

(74) Mandataire: **Cornillon, Jacques**
**15 rue Albert Ier B.P. 247**
**F-42006 Saint Etienne Cedex(FR)**

(54) **Système anti-départ avec bras de chargement de citerne.**

(57) L'invention concerne un système de sécurité destiné à empêcher le départ d'un camion citerne sur laquelle le bras de chargement n'aurait pas été désaccouplé après une opération de remplissage.

Une canalisation (2) est reliée à la vanne de fond (1). Un clapet anti retour (3) est intercalé sur cette canalisation (2) de telle sorte qu'il laisse passer l'air venant de la vanne de fonds (1). Le clapet anti retour (3) est relié par la canalisation (2) à un mano contact (4) et au clapet (5) à commande manuelle. Cette commande manuelle permet de mettre la canalisation (2) à l'atmosphère. Le mano contact (4) est relié par un système électrique (6) comme aux systèmes d'alerte (7) prévus sur le véhicule pour empêcher son départ ou attirer l'attention du conducteur tant que la canalisation (2) n'a pas été mise à l'atmosphère par l'intermédiaire du clapet (5).

La commande manuelle de celui-ci ne peut être actionnée qu'après démontage du bras de chargement (8).

fig.1

Croydon Printing Company Ltd

EP 0 129 488 A1

## SYSTEME ANTI DEPART DE CITERNE SUR VEHICULE
## AVEC BRAS DE CHARGEMENT ACCOUPLE

L'invention concerne un système de sécurité destiné à empêcher le départ d'un camion citerne sur laquelle le bras de chargement n'aurait pas été désaccouplé après une opération de remplissage.

On connait des systèmes de chargement des citernes, principalement pour les gaz (butane, propane, tetrène, ammoniac ...) par le moyen d'un bras de chargement accouplé à la citerne.

Des accidents nombreux et graves se produisent lorsque ce bras n'a pas été débranché après une opération de remplissage. Le départ du camion provoque l'arrachage du bras, la fuite du gaz et souvent son inflammation par le véhicule lui - même (échappement, circuit électrique...).

Or lors d'une opération de remplissage, les opérations suivantes doivent être effectuées préalablement et selon la séquence suivante :

* Blocage du frein à main et arrêt moteur.

* Branchement de la prise équipotentielle

* Ouverture du circuit électrique par le coupe batterie et commande du coffret.

* Branchement du bras de chargement.

* Ouverture de la vanne de fond pneumatique (ou hydraulique), pour permettre l'ouverture de la vanne de chargement du gaz.

Le dispositif selon l'invention permet d'éviter le départ du véhicule en alertant le conducteur du véhicule par des moyens sonores ou lumineux ou en empêchant la mise en route du véhicule en utilisant les accessoires ci-dessus nécessaires au chargement.

Selon une première caractéristique de l'invention, l'ouverture de la vanne de fond pneumatique ou hydraulique du véhicule envoie à travers un clapet anti-retour un volume d'air ou d'huile sous pression dans un mano contact.

Selon une autre caractéristique de l'invention, le mano contact est relié par un circuit électrique connu au klaxon, ou aux avertisseurs lumineux du véhicule, ou au circuit électrique de démarrage du véhicule ou à tout autre système d'alerte.

On comprend que tant que la pression d'air ou d'huile que pilote le mano contact lors de l'ouverture de la vanne de fond, n'a pas pu être mise à l'atmosphère ou au reservoir, le mano contact reste fermé. Par conséquent, lors d'une tentative de remise en route du véhicule porteur, la fermeture préalable du circuit électrique par le moyen du coupe batterie provoquera la mise en action des systèmes d'alerte préalablement énumérés.

Selon une autre caractéristique de l'invention, le volume d'air ou d'huile sous pression ayant piloté le mano contact peut être remis à l'atmosphère ou au reservoir par l'intermédiaire d'un clapet commandé par un levier à commande manuelle ne pouvant être manoeuvré que losque le bras de chargement a été désolidarisé de la citerne.

Par conséquent, tant que ce levier à commande manuelle n'aura pas été actionné, ce qui est impossible avec le bras de chargement accouplé de la citerne, toute tentative de rebrancher le circuit électrique du véhicule entrainera les systèmes d'alerte ou d'arrêt moteur.

Les dessins annexés, donnés à titre d'exemple non limitatif permettront de mieux comprendre les caractéristiques du système anti départ selon l'invention.

La figure 1 est une vue du schéma pneumatique ou hydraulique du dispositif selon l'invention.

La figure 2 est une vue en élévation du système de clapet et de levier à commande manuelle.

La figure 3 est une vue de gauche du système selon la figure 2.

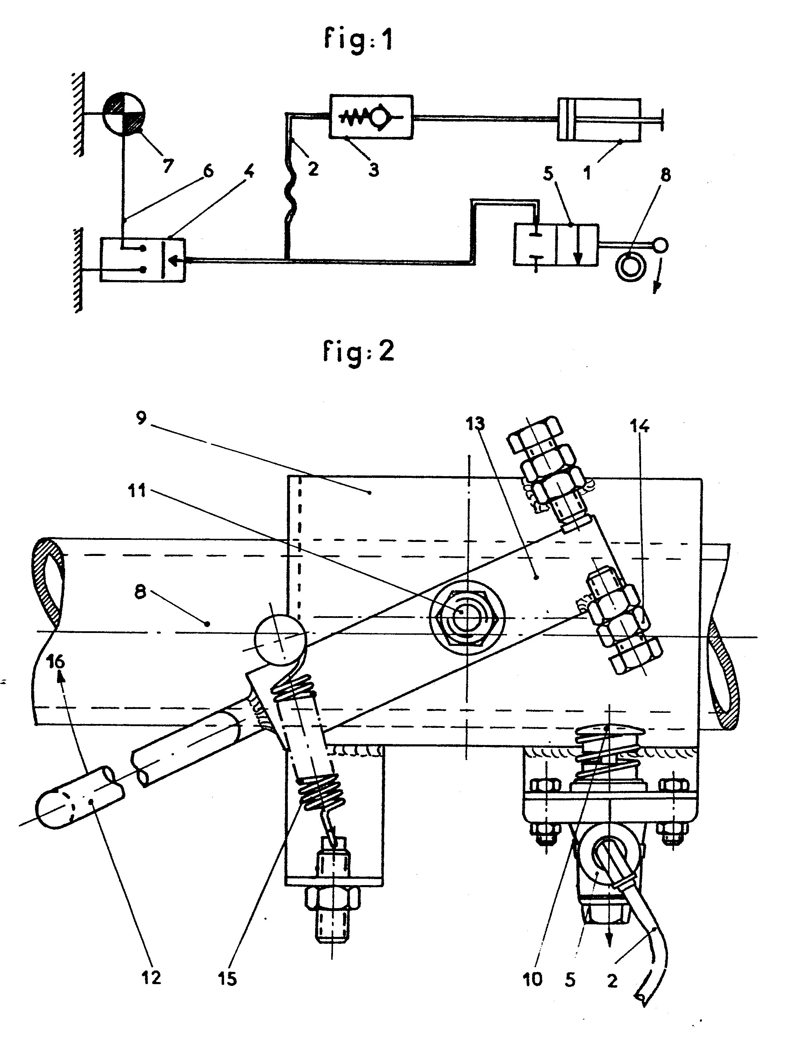

On a représenté sur la figure 1, le schéma du système pneumatique ou hydraulique/électrique du dispositif anti départ selon l'invention.

Une canalisation (2) est reliée à la vanne de fond (1). Un clapet anti retour (3) est intercalé sur cette canalisation (2) de telle sorte qu'il laisse passer l'air venant de la vanne de fond (1). Le clapet anti-retour (3) est relié par la canalisation (2) à un mano contact (4) et au clapet (5) à commande manuelle. Cette commande manuelle permet de mettre la canalisation (2) à l'atmosphère. Le mano contact (4) est relié par un système électrique (6) comme aux systèmes d'alerte (7) prévus. Sur le véhicule pour empêcher son départ ou attirer l'attention du conducteur tant que la canalisation (2) n'a pas été mise à l'atmosphère par l'intermédiaire du clapet (5). La commande manuelle de celuici ne peut être actionnée qu'après démontage du bras de chargement (8). Il est évident que le même schéma est valable pour un circuit hydraulique. Dans ce cas la canalisation (2) serait mise au réservoir par le clapet (5).

On a représenté sur la figure 2, une vue en élévation du levier de commande et du clapet formant la partie mécanique du système anti départ selon l'invention.

Le clapet (5) est fixé sur une plaque support (9) montée à proximité du bras de chargement (8). Le clapet (5) est commandé par un poussoir

3

(10) rappelé par un ressort. Il est alimenté par la canalisation (2).

Sur la plaque support (9) se trouve fixé un axe perpendiculaire (11) autour duquel pivote un bras (12) de préférence dans un plan parallèle à l'axe du bras de chargement.

A l'une des extrémités (13) du bras (12) se trouve un poussoir (14) réglable par exemple par un système vis écrou connu.

Un ressort de rappel (15) est intercalé entre le bras (12) et la plaque support (9) de façon à maintenir le poussoir (14) éloigné du poussoir (10) du clapet (5) en l'absence d'intervention extérieure.

Si l'on soulève le levier (12) dans le sens de la flèche (16), le poussoir (14) vient commander le poussoir (10) et met la canalisation (2) à l'atmosphère.

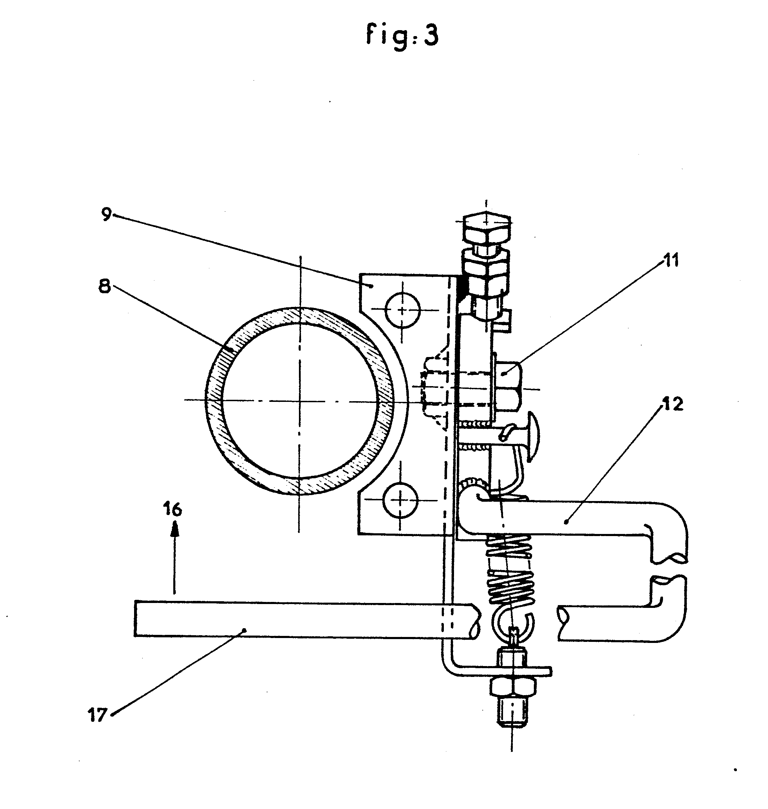

On a représenté sur la figure 3 une vue de gauche du système représenté par la figure 2.

La plaque support (9) est fixée sur la citerne à proximité immédiate du bras de chargement (8). Le levier (12) présente une extrémité (17) coudée de telle sorte que s'il est actionné dans le sens de la flèche (16), il vienne aussitôt interférer avec le bras de chargement (8).

On comprend que tant que ce bras de chargement (8) est solidaire de la citerne, on ne peut relever le levier (12). La canalisation (2) restera sous pression ainsi que le mano contact (5). Si l'on referme le coupe batterie , les avertisseurs d'alerte entrent en action, empêchant le départ du véhicule.

REVENDICATIONS

1 - Système anti départ de véhicule avec citerne solidarisée au bras de chargement caractérisé en ce qu'il comporte un circuit pneumatique formé d'une canalisation (2) reliée à la vanne de fond (1) sur laquelle sont intercalés successivement :
* Un clapet anti retour (3)
* Un clapet (5) commande manuelle,
* Un mano contact (4) relié à un système d'alerte (7).

2 - Système anti départ de véhicule avec citerne selon la revendication 1 caractérisé en ce que le clapet (5) est mis à l'atmosphère ou au réservoir par un levier (12) rappelé par un ressort (15).

3 - Système anti départ selon la revendication 2 caractérisé en ce que le clapet (5) est fixé sur une plaque support (9) sur laquelle est articulée le levier (12) est fixé le ressort de rappel (15).

4 - Système anti départ de camion citerne selon l'une quelconque des revendications 2 et 3 caractérisé en ce que le levier (12) est coudé de façon à interférer avec le bras de chargement (8) lors d'une manoeuvre.

5 - Système anti départ de camion citerne selon l'une quelconque des revendications 2 et 3 caractérisé en ce que la plaque support (9) est fixée à proximité du bras de chargement (8) dans un plan parallèle à l'axe du bras de chargement.

1/2

fig:1

fig:2

fig. 3

## 0129488

# RAPPORT DE RECHERCHE EUROPEENNE

**Office européen des brevets**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl ³) |
|---|---|---|---|
| A | BE-A- 865 924 (VAN HOE)<br>* Figure 1 *<br><br>----- | 1 | B 60 Q 9/00<br>B 60 K 28/00 |
| | | | **DOMAINES TECHNIQUES RECHERCHES (Int. Cl. ³)**<br><br>B 60 Q 9/00<br>B 60 K 28/00<br>B 60 P 3/22 |

Le présent rapport de recherche a été établi pour toutes les revendications

| Lieu de la recherche | Date d'achèvement de la recherche | Examinateur |
|---|---|---|
| LA HAYE | 06-09-1984 | ONILLON C.G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82